# NOUVEAU FASCICULE DE BREVET EUROPEEN

(11) **EP 2 791 537 B2**
(45) Date de publication et mention de la décision concernant l'opposition: **25.09.2024**
(45) Mention de la délivrance du brevet: 29.06.2016
(21) Numéro de dépôt: 12808348.2
(22) Date de dépôt: 14.12.2012
(51) Int. Cl.: F16D 65/097, F16D 55/226

(54) **ORGANE DE GUIDAGE À VERROU D'UN PATIN DE FREIN À DISQUE ET FREIN À DISQUE ÉQUIPÉ DE TELS ORGANES DE GUIDAGE**
MIT EINER BLOCKIERUNG AUSGESTATTETES ELEMENT ZUM FÜHREN EINES SCHEIBENBREMSBELAGS UND SCHEIBENBREMSE MIT SOLCHEN FÜHRUNGSELEMENTEN
LOCK-EQUIPPED MEMBER FOR GUIDING A DISC BRAKE PAD AND DISC BRAKE PROVIDED WITH SUCH GUIDING MEMBERS

(30) Priorité: 15.12.2011 FR 1103873
(43) Date de publication de la demande: 22.10.2014
(73) Titulaire: Robert Bosch GmbH, 70442 Stuttgart (DE)
(72) Inventeur: BERNARD, Simon, 94170 Le Perreux s/Marne (FR); MERRIEN, Sandra, 94120 Fontenay sous Bois (FR); MAHOUDEAUX, Roger, 93150 Le Blanc Mesnil (FR)
(86) Numéro de dépôt international: PCT/EP2012/075578
(87) Numéro de publication internationale: WO 2013/087854

(56) Documents cités:
- EP-A1- 1 591 689
- DE-A1- 19 956 968
- FR-A1- 2 925 634
- JP-A- H08 261 260
- US-A1- 2010 147 635

## Description

### Domaine de l'invention

La présente invention concerne un organe de guidage d'un patin de frein à disque dans une chape composée de deux bras reliés par deux pontets, chaque bras ayant à ses deux extrémités un logement axial de section sensiblement rectangulaire ayant un fond, une surface inférieure et une surface supérieure, le logement étant surmonté d'un plot,
- l'organe de guidage étant formé d'un ruban d'acier à ressort, plié, pour être fixé au plot et dans le logement du bras et recevoir en coulissement axial, l'oreille correspondante du patin, pour la guider et l'appuyer dans le logement.

Un tel organe de guidage d'un patin de frein dans le logement d'une chape d'un frein à disque facilite le déplacement de la plaquette de frein lors d'un freinage évitant les bruits souvent engendrés à ce moment.

L'invention concerne également un frein à disque équipé de tels organes de montage selon l'invention.

### Etat de la technique

Dans un véhicule équipé de freins à disque, chaque roue à freiner comporte un disque de frein solidaire de la roue et des patins de frein solidaires du châssis du véhicule qui viennent par friction freiner le disque. Le frein comporte un étrier avec une chape ayant de chaque côté du disque de frein une branche en U portant un patin de frein et chaque patin est mobile perpendiculairement au plan du disque, guidé par ses deux extrémités (oreilles) dans les logements des bras de la chape.

Lors d'un freinage, les patins sont entraînés selon la direction tangentielle au disque et les oreilles viennent buter, parfois brutalement, contre le fond de leur logement de guidage provoquant un bruit appelé « clonk » ou claquement. Pour amortir le choc des oreilles dans leur logement et ainsi atténuer le bruit, il est prévu, un ressort entre chaque oreille et son logement et l'amortissement est obtenu par la déformation du ressort dont la forme est adaptée à la force exercée par le patin de frein lors de son déplacement tangentiel.

Par ailleurs, le patin doit pouvoir se déplacer axialement par ses oreilles glissant dans le ressort de maintien qui combine une fonction de glissière et une fonction de ressort.

Une fois le patin en place, le système de glissière se déforme du fait des défauts géométriques et de l'effet de ressort, et crée un effet de ressort/raideur influant sur la génération de bruit au freinage.

On connaît déjà de tels organes de guidage de patins de frein à disque selon les documents DE 199 56 968 A1, WO 01/31223 et FR 07 09 124.

### But de l'invention

La présente invention a pour but de perfectionner de tels organes de guidage de freins à disque pour améliorer leur efficacité.

### Exposé et avantages de l'invention

A cet effet, l'invention concerne un organe de guidage selon la revendication 1.

L'organe de guidage selon l'invention est parfaitement fixé au bras de la chape à la fois par son maintien sur le plot et son accrochage par la languette de verrouillage dans le logement du bras. La forme en U du corps de l'organe de guidage offre un bon contact de guidage au ressort auxiliaire ou ressort radial équipant chaque oreille du patin et favorisant non seulement la sensibilité du mouvement de freinage.

Le soulèvement de la surface radiale intérieure par rapport à la surface inférieure du logement du fait de la languette de verrouillage venant en saillie, crée un effet de ressort qui soulève le corps de l'organe de guidage et l'applique contre la surface supérieure du logement. Cet appui est également celui de l'oreille du patin. On réduit ainsi élastiquement tout jeu à ce niveau.

Suivant la présente invention, la languette de verrouillage est découpée à cheval sur le coin cintré à la jonction du fond et de la surface radiale intérieure pour venir naturellement en saillie de sa découpe. Cette forme de réalisation de la languette de verrouillage permet à la surface radiale intérieure de l'organe de guidage de bénéficier de l'élasticité créée par le cintrage du coin inférieur du corps.

Suivant une autre caractéristique particulièrement avantageuse, la languette de verrouillage vient en saillie suivant un angle de l'ordre 45° par rapport à la surface radiale intérieure.

L'équilibre de l'organe de guidage est assuré notamment en ce que la languette de verrouillage est découpée et déformée élastiquement dans le fond et dans la surface radiale intérieure du corps, sensiblement au milieu de la longueur axiale du ruban formant l'organe de guidage et au niveau du coin cintré entre le fond et la surface radiale intérieure.

L'accrochage de la languette de verrouillage est amélioré en ce que la languette de verrouillage a un bord formé de deux parties arrondies de part et d'autre d'une partie incurvée.

Suivant une autre caractéristique avantageuse, les deux butées latérales sont constituées par des languettes découpées dans la surface d'appui avant extérieure avec un rayon de découpe important et un cintrage formant un pli.

Suivant une autre caractéristique avantageuse, l'arête de pliage entre la surface radiale intérieure du corps et la surface d'appui intérieure, comporte une découpe longitudinale sur une partie importante de sa longueur axiale en laissant subsister la matière aux extrémités formant des attaches pliées.

Grâce à cette liaison entre la surface radiale intérieure et la surface d'appui intérieure, la liaison ne présente pas de caractéristique de ressort, de sorte que la surface d'appui intérieure se plaque bien contre la surface de la chape au-delà du logement.

L'invention concerne également un frein à disque équipé d'organes de guidage tels que définis ci-dessus.

### Dessins

La présente invention sera décrite ci-après de manière plus détaillée à l'aide d'un exemple de réalisation d'un organe de guidage de patin de frein à disque selon l'invention représenté dans les dessins annexés dans lesquels :
- la figure 1 est une vue isométrique de l'organe de guidage selon l'invention,
- la figure 2 est une vue de côté de l'organe de la figure 1,
- la figure 3 est une vue en coupe selon A-A du ressort de la figure 2,
- la figure 3A est une vue du détail D de la figure 3,
- la figure 4 est une vue de côté d'une partie de bras de chape de frein à disque équipée d'un organe de guidage et d'un patin de frein,

### Description de modes de réalisation de l'invention

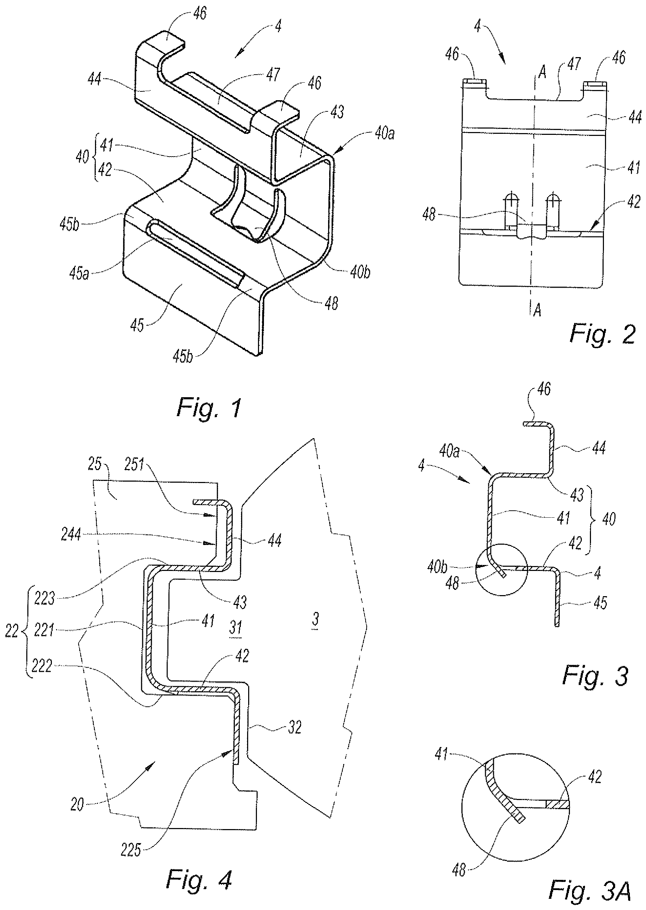

La figure 1 montre un organe de guidage 4 selon l'invention, en position non installée et pour sa description on utilisera les conventions d'orientation définies à l'aide de la figure 4 par les notions « radial », « intérieur », « extérieur », « inférieur » et « supérieur ».

L'organe de guidage 4 est obtenu par la mise en forme d'un ruban en acier à ressort. Il se compose d'un corps 40 en forme de U couché, de section sensiblement rectangulaire avec des coins 40a, 40b cintrés, comprenant un fond 41 se poursuivant d'un côté vers le bas par une surface radiale intérieure 42 et de l'autre côté par une surface radiale extérieure 43. Celle-ci se prolonge par une surface d'appui extérieure 44 bordée au dessus et de chaque côté par une languette de butée latérale 46 tournée vers l'arrière. Les deux languettes de butée 46 sont séparés par une découpe 47 avec de chaque côté un angle très arrondi pour conserver toute la rigidité aux languettes de butée 46 et à leur liaison avec la surface 44.

Une surface d'appui intérieure 45 est reliée à la surface radiale intérieure 42 par un pli avec une découpe 45a sur une grande partie de sa longueur, ne laissant subsister que deux attaches cintrées 45b aux deux extrémités.

La surface radiale intérieure 42 et le fond 41, sont munis d'une languette de verrouillage 48 découpée dans la masse, sensiblement au milieu de la longueur axiale de l'organe de guidage 4 à cheval sur le coin 40b. Cette languette de verrouillage 48 dépasse de la surface radiale intérieure 42, vers le bas (selon l'orientation de la figure 1) pour constituer un organe d'accrochage venant se gripper contre la surface inférieure 222 du logement 22 (voir figure 4).

Pour favoriser cet accrochage, le bord avant de la languette de verrouillage 48 comporte deux parties arrondies 481, venant en saillie, séparées par une partie incurvée en creux 482.

La figure 2 est une vue du côté arrière de l'organe de guidage 4 de la figure 1 montrant la disposition des deux languettes de butée latérales 46, la forme de la languette de verrouillage 48 et de sa découpe dans le fond 41 et dans la surface radiale intérieure 42, de manière à laisser la languette de verrouillage 48 jouer pleinement de son élasticité pour s'accrocher dans le logement 22 et y retenir par verrouillage, l'organe de guidage 4.

La figure 3 montre en coupe la section de l'organe de guidage 4 et de ses différentes parties constitutives, mettant en évidence la forme rectangulaire du corps 40 ainsi que le rattachement de la surface radiale intérieure 42, à l'équerre, au fond 41 du corps par le cintrage 40b.

La vue en coupe de la figure 3A faite à travers l'organe de guidage 4 au niveau du cintrage 40b du fond 41, souligne la forme en saillie de la languette 48 servant de surface d'accrochage. La languette 48 fait, avec la surface 42, un angle α de l'ordre de 30° à 50° et en particulier de l'ordre de 45°.

Le cintrage du pli des languettes 46, celui du pli entre les surfaces 43 et 44 ou encore celui entre les surfaces 41 et 43, sont faits avec des rayons de courbure très faibles, alors que la liaison entre le fond 41 et la surface 42 est faite avec un cintrage à rayon de courbure relativement important pour donner de l'élasticité et de la mobilité à la surface radiale intérieure 42 lorsque l'oreille 31 du patin appuie sur la surface 42 puisque la languette 48 venant en saillie, la surface 42 est nécessairement au moins localement au-dessus de la surface inférieure 222.

La figure 4 montre en vue de côté à échelle agrandie la disposition de l'oreille 31 du patin 3, venant dans le logement axial 22 de l'extrémité du bras 20 de la chape 2. Le logement 22 est bordé par une surface radiale inférieure 222, un fond 221 et une surface supérieure 223. La surface supérieure 223 fait partie d'un plot 25 auquel est fixé l'organe de guidage 4. Le logement de l'autre bras non représenté est équipé aussi d'un organe de guidage 4. Cette figure souligne la mise en place l'organe de guidage 4 avec sa surface d'appui avant 44 venant contre la surface avant 251 du plot 25 et les deux languettes de butées latérales 46 venant de part et d'autre du plot 25 ; la surface d'appui intérieure 45 vient contre la surface avant intérieure 225 du bras 20 sous l'oreille 31.

Le rôle des ressorts de guidage 4 est de guider le patin pour le freinage et son retour en position hors contact du disque de frein et d'amortir le choc des oreilles contre le fond de chaque logement 22 lorsque les patins 3 sont entraînés par le disque 1 pendant une opération de freinage. L'amortissement du choc résulte de la déformation des organes de guidage 4 sous la force exercée par les patins 3.

Les oreilles 31 aux deux extrémités du patin 3 coulissent axialement dans les ressorts de guidage 4, c'est-à-dire perpendiculairement au plan de la figure 1. Un ressort radial non représenté peut être interposé entre l'oreille 31 et le corps 40 de l'organe 4.

De manière générale le disque de frein 1 est chevauché par une chape composée de deux bras 20 reliés par deux pontets. Ces deux bras 20 viennent de part et d'autre du disque 1 et portent chacun un patin de frein. Les patins de frein 3 sont munis à leurs extrémités d'oreilles 31 pour leur montage dans les logements 22 de chaque bras, par l'intermédiaire d'un ressort de guidage 4 équipant chaque logement 22.

La figure 4 permet de préciser l'orientation des éléments du ressort 4 et du logement 22 :

Le fond 221 a une orientation globalement radiale, c'est-à-dire passant par l'axe du disque de frein et la surface inférieure 222 est plus près de l'axe du disque de frein que la surface supérieure 223. L'expression « intérieur », est synonyme de « inférieur » et l'expression « extérieur », est synonyme de « supérieur ».

L'invention concerne ainsi de manière générale les freins à disque et les équipements automobiles.

### NOMENCLATURE

- 1: disque
- 2: chape
20 bras en U
21 pontet
22 logement
221 fond
222 surface inférieure
223 surface supérieure
224 surface avant extérieure
225 surface avant intérieure
25 plot
251 surface avant du plot
- 3: patin
31 oreille
32 face avant inférieure
- 4: organe de guidage
40 corps
40a, b coins / cintrages
41 fond
42 surface radiale intérieure
43 surface radiale extérieure
44 surface d'appui extérieure
45 surface d'appui intérieure
45a découpe longitudinale
45b attache pliée
46 languette latérale
47 découpe
48 languette de verrouillage
481 partie arrondie
482 partie incurvée

## Revendications

(1) Organe de guidage d'un patin de frein à disque dans une chape composée de deux bras (20) reliés par deux pontets, chaque bras (20) ayant à ses deux extrémités un logement axial (22) de section sensiblement rectangulaire ayant un fond (221), une surface inférieure (222) et une surface supérieure (223), le logement (22) étant surmonté d'un plot (25),
(2) -- l'organe de guidage (4) étant formé d'un ruban d'acier à ressort, plié, pour être fixé au plot (25) et dans le logement (22) du bras (20) et recevoir en coulissement axial, l'oreille (31) correspondante du patin (3), pour la guider et l'appuyer dans le logement (22), organe de guidage **caractérisé par**
(3) -- un corps (40) à section en forme de U couché sensiblement rectangulaire pour se placer dans le logement (22) ayant
(4) une surface radiale extérieure (43) venant contre la surface supérieure (223) du logement (22),
(5) suivi d'un fond (41) venant contre le fond (221) du logement (22) et
(6) une surface radiale intérieure (42) et se poursuivant par,
(7) * une surface d'appui extérieure (44) venant contre la face avant (251) du plot (25) et portant
(8) deux languettes (46) pour former des butées latérales venant de part et d'autre du plot (25), et par,
(9) * une surface d'appui intérieure (45) venant contre la surface avant intérieure (225) du bras (20) et recevant la surface avant inférieure (32) du patin (3) sous l'oreille (31),
(10) la surface radiale intérieure (42) est munie d'une languette de verrouillage (48) pour s'appuyer et s'accrocher dans la surface inférieure (222) du logement (22),
(11) la languette de verrouillage (48) étant découpée à cheval sur le coin cintré (40b) à la jonction du fond (41) et de la surface radiale intérieure (42) pour venir naturellement en saillie de sa découpe,
(12) la languette de verrouillage (48) ayant un bord formé de deux parties arrondies (481) de part et d'autre d'une partie incurvée (482).

2. Organe de guidage selon la revendication 1,
**caractérisé en ce que**
la languette de verrouillage (48) vient en saillie suivant un angle de l'ordre 45° par rapport à la surface radiale intérieure (42).

3. Organe de guidage selon la revendication 1,
**caractérisé en ce que**
les deux butées latérales (46) sont constituées par des languettes découpées dans la surface d'appui avant extérieure (44) avec un rayon de découpage important et un cintrage formant un pli.

4. Organe de guidage selon la revendication 1,
**caractérisé en ce que**
la languette de verrouillage (48) est découpée et déformée élastiquement dans le fond (41) et dans la surface radiale intérieure (42) du corps (40), sensiblement au milieu de la longueur axiale du ruban formant l'organe de guidage et au niveau du coin cintré (40a) entre le fond (41) et la surface radiale intérieure (42).

5. Organe de guidage selon la revendication 1,
**caractérisé en ce que**
l'arrête de pliage entre la surface radiale intérieure (42) du corps (40) et la surface d'appui intérieure (45), comporte une découpe longitudinale (45a) sur une partie importante de sa longueur axiale en laissant subsister la matière aux extrémités formant des attaches pliées (45b).

6. Frein à disque comportant des organes de guidage (4) des patins de frein (3) selon l'une quelconque des revendications 1 à 5, **caractérisé en ce que** l'organe de guidage comporte :
- un corps (40) à section en forme de U couché sensiblement rectangulaire pour se placer dans le logement (22) ayant une surface radiale extérieure (43) venant contre la surface supérieure (223) du logement (22),
suivi d'un fond (41) venant contre le fond (221) du logement (22) et une surface radiale intérieure (42) et se poursuivant par,
* une surface d'appui extérieure (44) venant contre la face avant (251) du plot (25) et portant
deux languettes (46) pour former des butées latérales venant de part et d'autre du plot (25), et par,
* une surface d'appui intérieure (45) venant contre la surface avant intérieure (225) du bras (20) et recevant la face avant inférieure (32) du patin (3) sous l'oreille (31),
la surface radiale intérieure (42) est munie d'une languette de verrouillage (48) pour s'appuyer et s'accrocher dans la surface inférieure (222) du logement (22).

## Patentansprüche

(1) Organ zur Führung eines Scheibenbremsbelags in einer Abdeckung, welche von zwei durch zwei Bügel verbundenen Armen (20) gebildet wird, wobei jeder Arm (20) an seinen beiden Enden eine axiale Aufnahme (22) mit im Wesentlichen rechteckigem Querschnitt besitzt, welche einen Boden (221), eine untere Fläche (222) und eine obere Fläche (223) besitzt, wobei die Aufnahme (22) von einem Stopfen (25) überdeckt wird,
(2) - wobei das Führungsorgan (4) von einem Band aus Federstahl gebildet wird, welches gefaltet ist, um am Stopfen (25) und in der Aufnahme (22) des Arms (20) befestigt zu werden und axial gleitend den entsprechenden Lappen (31) des Belags (3) aufzunehmen, um ihn zu führen und ihn in die Aufnahme (22) zu drücken,
wobei das Führungsorgan **gekennzeichnet ist durch**
(3) - einen Körper (40) mit einem Querschnitt in Form eines liegenden, im Wesentlichen rechteckigen U, um sich in der Aufnahme (22) zu platzieren, welcher
(4) eine radiale, äußere Fläche (43) besitzt, welche an der oberen Fläche (223) der Aufnahme (22) anliegt,
(5) gefolgt von einem Boden (41), welcher am Boden (221) der Aufnahme (22) und
(6) an einer radialen, inneren Fläche (42) anliegt und sich
(7) * durch eine äußere Stützfläche (44), welche an der vorderen Fläche (251) des Stopfens (25) anliegt und
(8) zwei Zungen (46) trägt, um seitliche Anschläge zu bilden, welche beiderseits des Stopfens (25) liegen, und durch
(9) * eine innere Stützfläche (45) fortsetzt, welche an der vorderen, inneren Fläche (225) des Arms (20) anliegt und die vordere, untere Fläche (32) des Belags (3) unter dem Lappen (31) aufnimmt,
(10) die radiale, innere Fläche (42) mit einer Verriegelungszunge (48) versehen ist, um sich auf der unteren Fläche (222) der Aufnahme (22) abzustützen und sich darin festzuklammern,
(11) wobei die Verriegelungszunge (48) sattelförmig im gebogenen Winkel (40b) an der Schnittstelle zwischen dem Boden (41) und der radialen, inneren Fläche (42) ausgeschnitten ist, um in natürlicher Weise von seinem Ausschnitt vorzuspringen,
(12) wobei die Verriegelungszunge (48) einen Rand besitzt, welcher von zwei abgerundeten Abschnitten (481) beiderseits eines gekrümmten Abschnitts (482) gebildet wird.

2. Führungsorgan nach Anspruch 1,
**dadurch gekennzeichnet, dass**
die Verriegelungszunge (48) gemäß einem Winkel in der Größenordnung von 45° in Bezug auf die radiale, innere Fläche (42) vorspringt.

3. Führungsorgan nach Anspruch 1,
**dadurch gekennzeichnet, dass**
die beiden seitlichen Anschläge (46) von Zungen gebildet werden, welche aus der vorderen, äußeren Stützfläche (44) mit einem sehr großen Schnittradius und einer, einen Knick bildenden Biegung ausgeschnitten werden.

4. Führungsorgan nach Anspruch 1,
**dadurch gekennzeichnet, dass**
die Verriegelungszunge (48) in dem Boden (41) und in der radialen, inneren Fläche (42) des Körpers (40) im Wesentlichen in der Mitte der axialen Länge des das Führungsorgan bildenden Bandes und im Bereich des gebogenen Winkels (40a) zwischen dem Boden (41) und der radialen, inneren Fläche (42) ausgeschnitten und elastisch verformt wird.

5. Führungsorgan nach Anspruch 1,
**dadurch gekennzeichnet, dass**
der Faltungssteg zwischen der radialen, inneren Fläche (42) des Körpers (40) und der inneren Stützfläche (45) einen longitudinalen Einschnitt (45a) über einen sehr großen Abschnitt seiner axialen Länge aufweist, indem das Material an den Enden vorhanden bleibt, welche gefaltete Befestigungen (45b) bilden.

6. Scheibenbremse, welche Führungsorgane (4) der Bremsbeläge (3) nach einem der Ansprüche 1 bis 5 aufweist, **dadurch gekennzeichnet, dass** das Führungsorgan Folgendes aufweist:
- einen Körper (40) mit einem Querschnitt in Form eines liegenden, im Wesentlichen rechteckigen U, um sich in der Aufnahme (22) zu platzieren, welcher
eine radiale, äußere Fläche (43) besitzt, welche an der oberen Fläche (223) der Aufnahme (22) anliegt,
gefolgt von einem Boden (41), welcher am Boden (221) der Aufnahme (22) und
an einer radialen, inneren Fläche (42) anliegt und sich
* durch eine äußere Stützfläche (44), welche an der vorderen Fläche (251) des Stopfens (25) anliegt und
zwei Zungen (46) trägt, um seitliche Anschläge zu bilden, welche beiderseits des Stopfens (25) liegen, und durch
* eine innere Stützfläche (45) fortsetzt, welche an der vorderen, inneren Fläche (225) des Arms (20) anliegt und die vordere, untere Fläche (32) des Belags (3) unter dem Lappen (31) aufnimmt,
die radiale, innere Fläche (42) mit einer Verriegelungszunge (48) versehen ist, um sich auf der unteren Fläche (222) der Aufnahme (22) abzustützen und sich darin festzuklammern.

## Claims

(1) Guiding member for a disc brake pad in a cap which is composed of two arms (20) connected by two bars, each arm (20) having at the two ends thereof an axial housing (22) which has a substantially rectangular cross section and which has a base (221), a lower surface (222) and an upper surface (223), the housing (22) being surmounted by a stud (25),
(2) - the guiding member (4) being formed by a spring steel band which is folded in order to be fixed to the stud (25) and in the housing (22) of the arm (20) and to receive in an axially sliding manner the corresponding lug (31) of the pad (3), in order to guide it and to press it into the housing (22), which guiding member is **characterized by**
(3) - a body (40) which has a cross section in the form of a U on its side and which is substantially rectangular in order to be positioned in the housing (22), having
(4) an external radial surface (43) which moves into abutment against the upper surface (223) of the housing (22),
(5) followed by a base (41) which moves into abutment against the base (221) of the housing (22) and
(6) an internal radial surface (42), and which is continued by
(7) * an external abutment surface (44) which moves into abutment against the front face (251) of the stud (25) and which carries
(8) two tongues (46) in order to form lateral stops which extend on either side of the stud (25), and by
(9) * an internal abutment surface (45) which moves into abutment against the internal front surface (225) of the arm (20) and which receives the lower front surface (32) of the pad (3) under the lug (31),
(10) the internal radial surface (42) is provided with a locking tongue (48) in order to press against and become engaged in the lower surface (222) of the housing (22),
(11) the locking tongue (48) being cut in a straddling manner at the bent corner (40b) at the junction of the base (41) and the internal radial surface (42) in order to naturally project from the cutout thereof,
(12) the locking tongue (48) having an edge which is formed by two rounded portions (481) on either side of an inwardly curved portion (482).

2. Guiding member according to Claim 1,
**characterized in that**
the locking tongue (48) projects in accordance with an angle in the order of 45° relative
to the internal radial surface (42).

3. Guiding member according to Claim 1,
**characterized in that**
the two lateral stops (46) consist of tongues cut from the external front abutment surface (44) with a great cutting radius and a bend forming a fold.

4. Guiding member according to Claim 1,
**characterized in that**
the locking tongue (48) is cut and resiliently deformed from the base (41) and from the internal radial surface (42) of the body (40), substantially at the centre of the axial length of the strip forming the guiding member and in the region of the bent corner (40a) between the base (41) and the internal radial surface (42).

5. Guiding member according to Claim 1,
**characterized in that**
the folding edge between the internal radial surface (42) of the body (40) and the internal abutment surface (45) comprises a longitudinal cutout (45a) over a large portion of the axial length thereof, allowing the material to remain at the ends forming folded attachments (45b).

6. Disc brake comprising guiding members (4) of the brake pads (3) according to any one of Claims 1 to 5 **characterized in that** the guiding member comprises:
- a body (40) which has a cross section in the form of a U on its side and which is substantially rectangular in order to be positioned in the housing (22), having an external radial surface (43) which moves into abutment against the upper surface (223) of the housing (22), followed by a base (41) which moves into abutment against the base (221) of the housing (22) and an internal radial surface (42) and which is continued by
* an external abutment surface (44) which moves into abutment against the front face (251) of the stud (25) and which carries two tongues (46) in order to form lateral stops which extend on either side of the stud (25), and by
* an internal abutment surface (45) which moves into abutment against the internal front surface (225) of the arm (20) and which receives the lower front face (32) of the pad (3) under the lug (31), the internal radial surface (42) is provided with a locking tongue (48) in order to press against and become engaged in the lower surface (222) of the housing (22).
